# EUROPEAN PATENT APPLICATION

(11) **EP 2 939 987 A1**
(43) Date of publication of application: **04.11.2015**
(21) Application number: 13869248.8
(22) Date of filing: 19.12.2013
(51) Int. Cl.: C03C 17/00, C01B 33/14

(54) **METHOD FOR PRODUCING AN ANTI-REFLECTIVE COATING FOR OPTICAL AND THERMOELECTRICAL DEVICES**

(30) Priority: 27.12.2012 ES 201232049
(71) Applicant: Abengoa Solar New Technologies, S.A., 41014 Sevilla (ES)
(72) Inventor: CAPARRÓS JIMÉNEZ, Sebastian, E-41014 Sevilla (ES); SALOMÓN LEVY COHÉN, David, E-28006 Madrid (ES); ZAYAT SOUSS, Marcos Daniel, E-28006 Madrid (ES); CASTELLÓN ELIZONDO, Erick, E-28006 Madrid (ES); ALMENDRO FUENTES, David, E-28006 Madrid (ES)
(74) Representative: Pons Ariño, Angel
(86) International application number: PCT/ES2013/070900
(87) International publication number: WO 2014/102422

(57) **Abstract**

The invention relates to a sol-gel method for producing an anti-reflective coating from alcoxide-type precursors, that can subsequently be applied to glass or plastic substrates by spraying. The invention also relates to optical and thermoelectrical devices that have been coated with said anti-reflective material. This coating increases the transmittance of the transparent substrates over which it is applied, as a result of which it is useful to apply over high concentration solar modules (HCPV), for both primary lenses and secondary lenses, in conventional silicon or in CSP tubes.

## Description

The present invention relates to a method for obtaining antireflective coatings by the sol-gel technique on glass or plastic substrates. This coating increases the transmittance of the transparent substrates on which it is applied, so it is useful to apply to high concentration solar modules (HCPV), both in primary and secondary lenses, in conventional silicon or CSP tubes in thermoelectrics. Additionally, in glass windows of tower receivers.

Therefore, the invention could be framed in the field of solar and thermoelectric energy devices.

### STATE OF THE ART

Solar collectors require an outer glass cover which reduces the optical losses of light transmission. To solve this problem and increase the performance of a system, a coating with a predetermined thickness on a substrate whose transmittance varies between 0.90 and 0.92 is used, so that the transmitted light lost varies between 8 and 10% of the incident solar radiation. In order to reduce these losses antireflective coatings prepared by different techniques are used. For a glass substrate with a refractive index of 1.45, a coating or an antireflective coating with a lower rate should be used, so that the result is a reduction in transmission losses.

The sol-gel technology has been a breakthrough in the field of coatings. This technique allows the preparation of complex formulations of inorganic oxides at room temperature obtained from liquid components which, by chemical reactions, take a solid structure (thin film) used for coating substrates, highlighting its strength and good optical properties.

There are several commercial coatings applied using sol-gel technology used in the field of solar energy. Document EP1329433A1 discloses sol-gel preparation of porous coatings by immersion or spray on different substrates using high concentrations of Triton® and subsequent heat treatment to burn Triton^{T}®. These coatings require curing at high temperatures (400-600°C) to burn the surfactant and achieve mechanical stability.

Document EP1074526A2 describes the sol-gel preparation of antireflective and levelling film on substrates of glass / tin oxide by immersion. These coatings are oriented to coat conductive tin oxide whose application on glass substrates would not result in an antireflective coating.

Document US5580819A describes sol-gel preparation of antireflectants with different functional groups on solid substrates, curing and treatment with aqueous electrolyte solution to produce porosity. This procedure allows to obtain hybrid sol-gel films of a strong organic nature spoiled using electrolytes to achieve porosity, although these coatings are not suitable for outdoor use.

### DESCRIPTION OF THE INVENTION

The present invention describes the preparation of a coating with antireflective properties by a sol-gel process, to be subsequently applied to solar collectors by spray technique to optimize its light transmission, and thus increasing system efficiency. The main advantage of the method described, in comparison with other techniques for preparing antireflective coatings, is the versatility of the technique which allows to achieve optimal formulation to acquire the desired optical characteristics with good photochemical properties and mechanical and chemical stabilities against environmental agents.

The physicochemical characteristics of the coating allow its application on the collectors by spray technique, which represents several advantages over other techniques such as immersion, which is currently the most widely used for CSP tube coating, for example. As is known, spray application is simpler, it allows working with small pieces and is an automated process that does not require more complex equipment or processes like vacuum or evaporation. Also, the utilization of deposition techniques by centrifugation results on obtaining less homogeneous coatings.

Therefore, a first aspect of the invention relates to a sol-gel method for obtaining an antireflective coating comprising the following steps:
a) Preparing a solution by mixing a compound of formula (I) 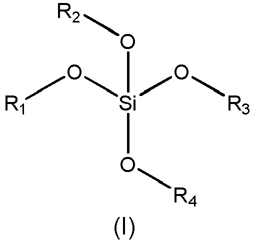 with a compound of formula (II) 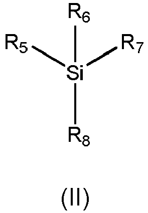 wherein R₁, R₂, R₃ and R₄ are linear or branched, identical or different C₁-C₆ alkyl groups; and R₅, R₆, R₇ and R₈ are identical or different and are selected from linear or branched C₁-C₆ alkyl groups or linear or branched C₁-C₆ alkoxy groups, and wherein at least one group R₅, R₆, R₇ or R₈ is an alkyl group;
   in a medium comprising water, a C₁-C₄ alcohol and an inorganic acid, letting it hydrolyse for 1 to 10 hours at a temperature of between 50 and 100°C, preferably at a temperature of between 60 to 90°C and more preferably for a time of 2 to 5 hours.
b) addition of a natural oil and a non-ionic surfactant to the solution obtained in (a), letting it hydrolyse for 1 to 10 hours at a temperature of between 50 and 100°C, preferably at a temperature of between 60 and 90°C and more preferably for from 2 to 5 hours.

In the present invention "alkyl" is understood as aliphatic chains, either linear or branched, having 1 to 10 carbon atoms, for example methyl, ethyl, *n-*propyl, *i*-propyl, *n*-butyl, *tert*-butyl, sec-butyl, n-pentyl, n-hexyl, etc. Preferably the alkyl group has from 1 to 6 carbon atoms. More preferably, methyl, n-ethyl, n-propyl, n-butyl. The alkyl groups may be optionally substituted by one or more substituents such as halogen, hydroxyl, azide, carboxylic acid or a substituted or non-substituted group selected from amino, amido, carboxylic ester, ether, thiol, acylamino or carboxamide.

In the present invention "alkoxy" is understood as a group of formula - ORₐ wherein Rₐ is an alkyl as described above. Preferably, the term alkoxy refers to methoxy, ethoxy or propoxy.

In the present invention "alcohol" is understood as an alkyl group as described above comprising at least one -OH group as a substituent of a carbon, either terminal or intermediate. Preferably, the alcohol is methanol, ethanol or propanol.

In a preferred embodiment, R₁, R₂, R₃ and R₄ are a C₁-C₄ alkyl, either identical or different. In a more preferred embodiment, R₁, R₂, R₃ and R₄ are ethyl.

In another preferred embodiment, at least one of R₅, R₆, R₇ or R₈ is a C₁-C₂ alkyl. In a more preferred embodiment, at least one of R₅, R₆, R₇ or R₈ is methyl.

In another preferred embodiment, at least one of R₅, R₆, R₇ or R₈ is C₁-C₄ alcoxy, either identical or different. In a more preferred embodiment, at least one of R₅, R₆, R₇ or R₈ is ethoxy. In another more preferred embodiment, wherein R₅ is methyl and R₆, R₇ and R₈ are ethoxy.

In another preferred embodiment, the C₁-C₄ alcohol used in step (a) is ethanol.

The inorganic acid used in step (a) can be any inorganic acid known by one skilled in the art such as hydrochloric acid, sulphuric acid, nitric acid or phosphoric acid, but nitric acid is preferably used.

The natural oil of step (b) can be any natural oil known by one skilled in the art such as castor oil, olive oil, sunflower oil, argan oil, coconut oil, walnut oil, almond oil, hemp oil, marigold oil, borage oil, etc. or mixtures thereof. But preferably castor oil is employed.

The non-ionic surfactant may be any known by one skilled in the art such as, but not limited to, those of the following types: Lutensol®, Basoclean®, Basorol®, Basosol®, Triton®, Brij® or Tween®.

In a preferred embodiment the molar ratio between the compounds of formula (I) and (II) is between 2.5:1 and 3.5:1, the molar ratio between the compounds of formula (I) plus (II) and C₁-C₄ alcohol in step (a) is between 1:3 and 1:4. The molar ratio between the compounds of formula (I) plus (II) and water is between 1:1.8 and 1:2.2. The molar ratio between the compounds of formula (I) plus (II) and the inorganic acid is between 1:0.1 and 1:0.15. The molar ratio between the compounds of formula (I) plus (II) and the surfactant is between 1:0.10 and 1:0.15. The molar ratio between the compounds of formula (I) plus (II) and the oil is between 1:0.04 and 1:0.05.

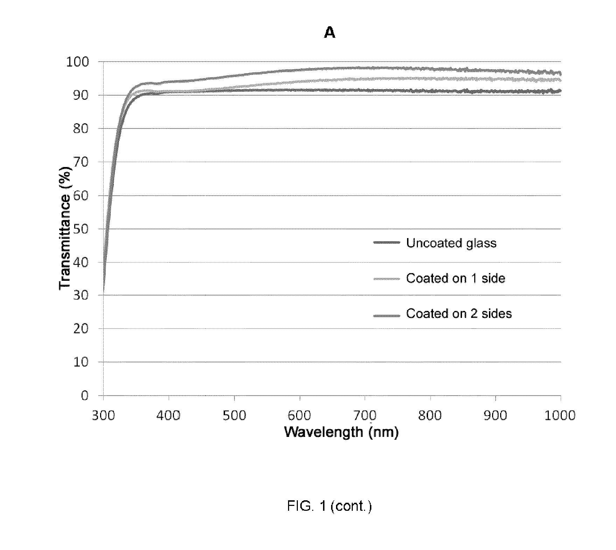

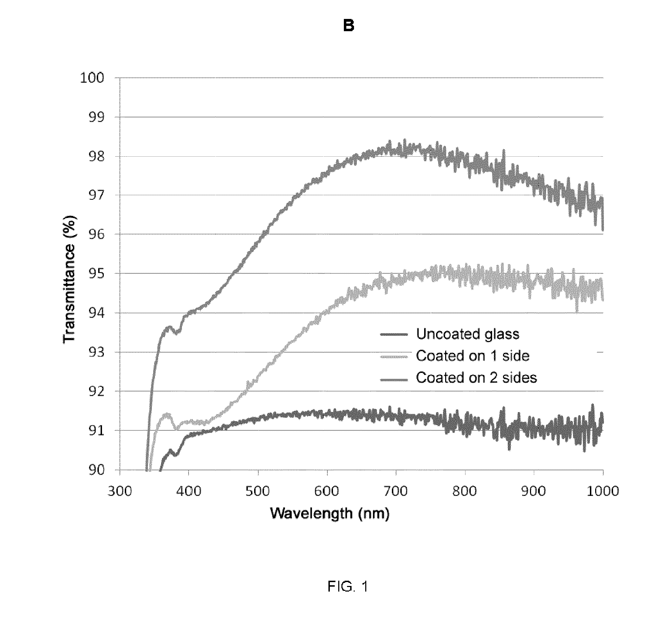

The antireflective film formed by the method described above improves the light transmittance of solar glass used as substrate. As a representative case, it can be indicated that the transmittance increases from 91.4% (600nm) to 94% when the coating is carried out on one side or 97.6% when performed on both sides. Applying the coating on one side of the glass has rendered a 5% improvement in current intensity measured in a photovoltaic cell (see figure 1). This increase in intensity is directly proportional to the increase of light received by that cell. This results in a considerable improvement when it comes to performance of solar concentrator lenses.

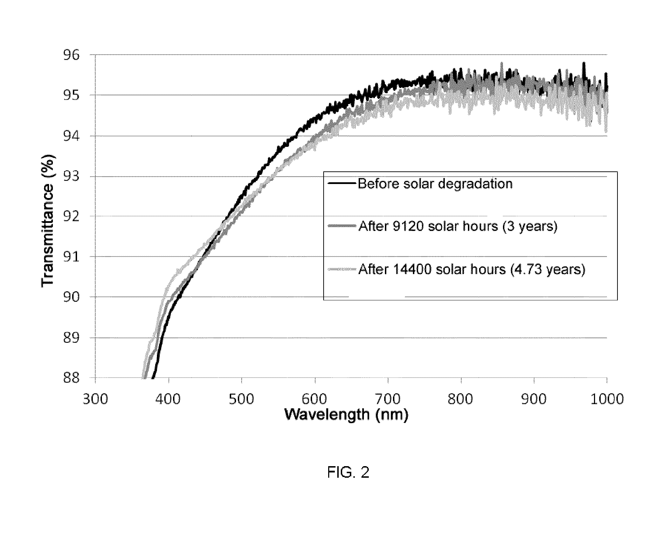

Regarding photochemical stability, it should be noted that the durability of the coating is very high as it is seen in the degradation tests of example 2, wherein it is shown that the coatings have a degradation against solar radiation which is minimal. After the direct exposure of the samples to sunlight, only a decrease of 0.50-0.60% transmittance in wavelength of 600 nm or less than 0.22% in wavelength of 800 nm is observed, as shown in Figure 2. This is equivalent to an average decrease of 0.55% of absolute transmittance of the coated substrate with respect to its initial value. Figure 2 shows a comparison with the optical transmission of the substrates before and after degradation experiments

In a second aspect, the present invention relates to an antireflective coating obtainable according to the method described above and characterized in that it presents a refractive index of between 1.2 and 1.3 and preferably about 1.25.

In a preferred embodiment, the antireflective coating has a thickness of between 80 and 200 nm and preferably about 160 nm.

In third aspect the present invention relates to an optical or thermoelectric device comprising at least one layer of the coating described above.

The coating of the present invention is applicable to any thermoelectric or optical device used in solar energy facilities and that requires improved efficiency reducing losses through refraction. Preferably these devices are selected from high-concentration solar modules, silicon panels or CSP tubes.

In a fourth aspect, the present invention relates to a method for obtaining the device described above comprising the following steps:
a) Application of the antireflective coating obtained by the method described by spray technique on a substrate.
b) Curing the film applied in the previous step at a temperature of 90-200°C for a time of between 10 to 60 minutes, preferably at a temperature of 95-150°C for 12 to 30 minutes.

Preferably, an additional step of curing the product obtained in (b) at a temperature between 200 to 400°C is performed for a time of 5 to 15 hours, preferably between 100-350°C for 7 to 13 hours.

When the structure and characteristics of the substrate allow it, it can be coated on both sides.

The substrate may be any transparent material known by one skilled in the art with suitable physicochemical characteristics for the sufficient adhesion of the antireflective coating. Non-limiting examples of suitable substrates are glasses, glass, silicon or plastics.

Throughout the description and claims the word "comprise" and its variations are not intended to exclude other technical features, additives, components or steps. For those skilled in the art, other objects, advantages and features of the invention will arise partly from the description and partly from practice of the invention. The following examples and figures are provided by way of illustration, and are not intended to limit the scope of the present invention.

### DESCRIPTION OF THE FIGURES

Figure 1 shows the transmission spectra of the substrates without the antireflective coating, and with the coating on one and on both sides of the substrate (A). For clarity the part of interest of the figure has been enlarged (B).
Figure 2 shows the transmission spectra relating to the durability of the coating against solar radiation. Before exposing the coating to the sun, after 9,120 h and after 14,400 h. Also, uncoated substrate spectra before and after irradiation are shown.

### EXAMPLES

The method of preparation and processing of the antireflective treatments and assays conducted demonstrating the advantageous properties are shown below.

### Example 1: preparation of antireflective coating and deposition on glass substrates.

First, the sol solution was prepared by mixing 2.147 µl of TEOS (tetraethyl orthosilicate) with 639 µl of MeTES (Tri-ethoxy-methylsilane) 2,637 µl of absolute ethanol, 462 µl of deionized H₂O and 114 µl of nitric acid 60%. It is mixed with continuous stirring and this sol is hydrolysed for 3 hours at 65°C in thermostatic bath at 300 rpm. 5 ml of the hydrolysed sol are taken adding 436 mg of castor oil and 10 ml of Brij56 (non-ionic surfactant) dissolved in ethanol (11.2% m / m); they are vigorously mixed and re-hydrolysed for 3 hours at 65°C in water bath at 300 rpm. Then allowed to cool at room temperature for a few minutes.

Then we proceed with the deposition by spray technique of the sol-gel previously obtained to form the antireflective film. First we proceed to the cleaning of glass substrates to be deposited with ethanol. Then we prepare a dilution 1: 2 of sol hydrolysed and tempered in ethanol (per ml of sol 2 ml of ethanol are added) and the dilution is introduced into the deposit of the spray gun which is fixed 11 cm from the sample holder. The sample is placed in the centre of the sample holder passing below the gun, in the centre of the spray pattern, and we proceed to deposit on the substrate. Finally the solvent is allowed to evaporate for 10 seconds in air and the sample is removed to deposit onto the next.

Finally, we proceed to the curing of the antireflective film deposited by introducing the samples at 100°C for 15 minutes in an oven or furnace. Additionally, a second curing at 300°C for 10 hours may be done. This enables an optimal drying of the coatings without deterioration of the initial chemical formula, besides significantly improving the mechanical properties.

Characterization of films deposited using modelling software based on the transmittance spectrum of the sample exhibits porous coatings of about 160 nm thick with a refractive index between 1.2 and 1.25.

### Example 2: measurement of the transmittance of the coated substrates obtained in Example 1.

Subsequently, the transmittance depending on the wavelength of the coated substrates obtained in Example 1 was measured by using a Cary 50 UV spectrophotometer. The substrates coated on both sides were also measured. The data obtained are shown in Figure 1. As mentioned above, said transmittance increases from 91.4% (600nm) to 94% when the coating is carried out on one side or to 97.6% when performed on both sides.

### Example 3: photochemical stability test of the coated substrates obtained in Example 1.

To test the photochemical stability of the coated substrates a solar simulator is used that reproduces the spectrum of sunlight and focuses the light to accelerate the measurement. Coated glass substrates obtained in Example 1 are exposed to radiation for 45 days at a temperature of 120°C receiving a concentrated source of radiation equivalent to "10x Suns" which is equivalent to 600 days of solar irradiation or 14,400 hours of direct sunlight irradiation at 1 sun. Figure 2 shows how the percentage of transmittance is virtually unchanged (average decrease of 0.55% absolute transmittance of the coated substrate with respect to the initial values) despite being exposed for over 14,400 hours.

### Example 4: measurement of the efficiency of uncoated optical systems and those coated with the coating of the invention.

The intensity generated by an optical system was measured, particularly for a high-concentration photovoltaic module. A voltmeter was used as measuring instrument. The measurements were:
- Without the antireflective treatment, 2.7 Amps were measured.
- With the antireflective treatment, in the secondary lens of the high-concentration photovoltaic module, 2.85 Amps were measured.

The rise in current is directly proportional to the amount of light that reaches the secondary lens.

According to these data, the application of antireflective coating has rendered a 5% increase in the transmitted current intensity from the same captured radiation, which shows that this coating causes an increase in the efficiency of photovoltaic systems.

## Claims

1. A sol-gel method for obtaining an antireflective coating comprising the following steps:
a) Preparing a solution by mixing a compound of formula (I) 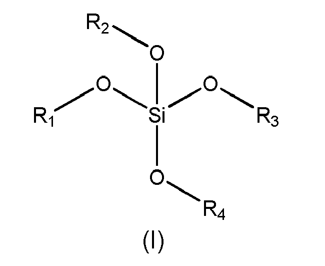 with a compound of formula (II) 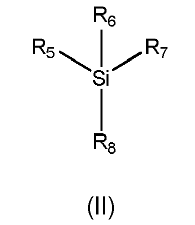 wherein R₁, R₂, R₃ and R₄ are linear or branched, identical or different C₁-C₆ alkyl groups; and R₅, R₆, R₇ and R₈ are identical or different and are selected from linear or branched C₁-C₆ alkyl groups or linear or branched C₁-C₆ alkoxy groups, and wherein at least one group R₅, R₆, R₇ or R₈ is an alkyl group;
in a medium comprising water, a C₁-C₄ alcohol and an inorganic acid, being letting it hydrolyse for 1 to 10 hours at a temperature of between 50 and 100°C.
b) addition of a natural oil and a non-ionic surfactant to the solution obtained in step (a), letting it hydrolyse for 1 to 10 hours at a temperature of between 50 and 100°C.

2. The method according to claim 1 wherein R₁, R₂, R₃ or R₄ are an alkyl C₁-C₄, either the identical or different.

3. The method according to claim 2 wherein R₁, R₂, R₃ and R₄ are ethyl.

4. The method according to any one of the preceding claims, wherein at least one of R₅, R₆, R₇ or R₈ is an alkyl C₁-C₂.

5. The method according to claim 4 wherein at least one of R₅, R₆, R₇ or R₈ is methyl.

6. The method according to any one of the preceding claims, wherein at least one of R₅, R₆, R₇ or R₈ is alkoxy C₁-C₄, either identical or different.

7. The method according to claim 6 wherein at least one of R₅, R₆, R₇ or R₈ is ethoxy.

8. The method according to any one of claims 1 to 7 wherein R₅ is methyl and R₆, R₇ or R₈ are ethoxy.

9. The method according to any one of the preceding claims, wherein the alcohol C₁-C₄ used in step (a) is ethanol.

10. The method according to any of the preceding claims, wherein the inorganic acid used in step (a) is nitric acid.

11. The method according to any of the preceding claims, wherein the natural oil of step (b) is selected from a list comprising castor oil, olive oil, sunflower oil, argan oil, coconut oil, pecan oil, almond oil, hemp oil, marigold oil, borage oil or mixtures thereof.

12. The method according to any of the preceding claims, wherein in step (a) and in step (b) it is let hydrolyse at a temperature of between 60 and 90°C.

13. The method according to any of the preceding claims, wherein in step (a) and in step (b) it is left to hydrolyse for a time of between 2 and 5 hours.

14. Antireflective coating obtainable according to any of claims 1 to 13 **characterized in that** it presents a refractive index of between 1.2 and 1.3.

15. Optical or thermoelectric device comprising the antireflective coating according to claim 14.

16. Device according to claim 15 which is selected from high-concentration solar modules, silicon panels or CSP tubes.

17. Device according to either claim 15 or 16 wherein the antireflective coating has a thickness of between 80 and 200 nm.

18. Method of obtaining the device according to claim 16 comprising the following steps:
a) Application of the coating according to claim 14 by spray technique on a substrate.
b) Curing of the film applied in the above step at a temperature of 90-200°C for a time between 10 to 60 minutes

19. A method according to claim 18 wherein step (b) is performed at a temperature of 95-150°C for a time between 12 to 30 minutes.

20. A method according to either claim 18 or 19 comprising an additional step of curing the product obtained in (b) at a temperature between 200 to 400°C for a time of 5 to 15 hours.

21. A method according to the preceding claim wherein the additional curing step is conducted at a temperature of 100-350°C for a time of 7 to 13 hours.
